# EUROPÄISCHE PATENTSCHRIFT

(11) **EP 2 996 970 B1**
(45) Veröffentlichungstag und Bekanntmachung des Hinweises auf die Patenterteilung: **22.08.2018**
(21) Anmeldenummer: 14721761.6
(22) Anmeldetag: 19.04.2014
(51) Int. Cl.: B65G 21/20

(54) **GELÄDERTRÄGER**
RAILING SUPPORT
PORTE-GARDE-CORPS

(30) Priorität: 16.05.2013 DE 102013105018
(43) Veröffentlichungstag der Anmeldung: 23.03.2016
(73) Patentinhaber: KHS GmbH, 44143 Dortmund (DE)
(72) Erfinder: PEIL, Martin, 44329 Dortmund (DE)
(86) Internationale Anmeldenummer: PCT/EP2014/001080
(87) Internationale Veröffentlichungsnummer: WO 2014/183828

(56) Entgegenhaltungen:
- WO-A1-03/042075
- WO-A1-2012/090079
- DE-U1-202007 001 109
- JP-A- H08 133 444
- US-A- 3 854 688
- US-A- 5 626 221
- US-A- 5 692 596
- US-B1- 6 189 685

## Beschreibung

Die Erfindung betrifft eine Führungseinheit für eine Behälterbehandlungsanlage mit einem Grundkörperabschnitt, insbesondere einem Formatteil, einem Geländerträger zum Anordnen eines Behälterführungsgeländers und einem den Grundkörperabschnitt und dem Geländerträger verbindenden Geländersteg. Weiter betrifft die Erfindung ein Verfahren zum Herstellen einer Führungseinheit nach dem Oberbegriff des Anspruchs 11. Es sind unterschiedlichste Transportvorrichtungen mit umlaufenden Transporteinheiten, wie Transportketten oder Transportbänder, bekannt, die Behälter bspw. durch eine Behälterbehandlungsanlage transportieren. Damit die Behälter nicht seitlich von der Transporteinheit fallen, sind üblicherweise an einem Gestell der Transporteinheit aufwendig gestaltete Stützelemente angeordnet, die mit einer seitlichen Führung verbunden sind. Die Dokumente WO 2012/090079 A1, US 3,854,688, US 6,189,685 B1 und DE 20 2007 001 109 U1 zeigen dabei bspw. Bleche umfassende Stützelemente, an denen Führungsgeländer mittels einer Kopplungseinheit befestigt sind. Der Abstand der Führungsgeländer zu der Transporteinheit ist über eine Verstellvorrichtung einstellbar. Eine präzise Einstellung der für die jeweiligen Behälter exakt notwendigen Position ist jedoch extrem aufwendig.

Hinsichtlich der Bleche umfassenden Stützelemente offenbart die WO 20121090079 A1 den Oberbegriff des Anspruchs 1 und mehr im Detail, dass die Stützelemente und die Kopplungselemente als getrennte Bauteile ausgeführt sind. Zum Verbinden von Stützelement und Kopplungselement sind zusätzliche Verbindungselemente zwingend erforderlich. Zur Fertigstellung müssen Stützelement, Kopplungselement und die zusätzlichen Verbindungselemente durch eine aufwändige, manuelle Montage mit einander verbunden werden. Da in einer Behälterbehandlungsanlage zahlreiche derartige Stützelemente verbaut sind, werden der hohe konstruktive und fertigungstechnische Aufwand und die überaus zeitaufwändige, manuelle Montage als sehr nachteilig angesehen.

Behälterbehandlungsanlagen sind in unterschiedlichen Ausführungen, z.B. als Füllmaschinen, Etikettiermaschinen, Inspektionsmaschinen oder Rinser bekannt. Ebenso sind verschiedene Arten von Behältern wie beispielsweise Flaschen oder Dosen bekannt. Diese können aus Materialien wie Glas, Kunststoff oder Metall bestehen und sowohl in ihrer Größe als auch Form voneinander abweichen. Auch die Beschaffenheit der Materialien wie z. B. Transparenz oder Transluzenz können beispielsweise abhängig von dem Verwendungszweck der Behälter unterschiedlich ausgebildet sein. Die Behälter sind insbesondere zum Befüllen mit Flüssigkeiten, wie beispielsweise Getränken, ausgebildet.

Die Behälterbehandlungsanlagen weisen Führungseinheiten, die zum Durchführen Behälter, wie beispielsweise die Behälterform, das Behältergewicht und/oder die Behältergröße angepasst.

Damit die Behälterbehandlungsanlage für unterschiedliche Behälter einsetzbar ist, sind die Führungsbereiche zumindest teilweise auswechselbar, sodass für jede Behälterart oder jede Gruppe von Behältern montierbare Formatteile vorhanden sind.

Die an den Führungseinheiten angeordneten Behälterführungsgeländer sind ebenfalls auf die jeweilige Behältergröße und -art abgestimmt. Die Behälterführungsgeländer sind zumeist als lange Führungsschienen ausgebildet, die in einer Vielzahl von nebeneinander an der Führungseinheit beabstandeten Geländerträger angeordnet sind und an denen die Flaschen in der Behälterführungsanlage entlang gleiten.

Bedingt durch den direkten Kontakt zwischen Führungsschienen und den Behältern und der Bewegung der Behälter relativ zu den Führungsschienen verschließen die Führungsschienen regelmäßig, so dass eine leichte Auswechselbarkeit der Führungsschienen von großem Vorteil ist.

Um eine einfache und sichere Montage und/oder Auswechselbarkeit der Behälterführungsgelände zu ermöglichen, beziehungsweise eine sichere Führung der Behälter am Behälterführungsgeländer zu gewährleisten, muss die Ausrichtung der Geländerträger zueinander beziehungsweise die Ausrichtung der Geländerträger an einem Grundkörper der Führungseinheiten, d. h. einem Grundkörperabschnitt, mit einer sehr hohen Genauigkeit erfolgen.

Derzeit werden die einzelnen Geländerträger, die meistens einen aufwendig geformten Profilkörper zur Aufnahme des Behälterführungsgeländers aufweisen, an einen Abschnitt der Führungseinheit, insbesondere eines Formatteils, angeschweißt. Der Zeitaufwand zur präzisen Ausrichtung der Vielzahl von Geländerträgern und des gegebenenfalls notwendigen Richtens der Geländerträger ist kostenintensiv. Hinzu kommt eine hohe Fehleranfälligkeit beim Anschweißen oder Richten, sodass es häufig zu Nacharbeiten kommt.

Ein weiterer Nachteil dieses Standes der Technik besteht darin, dass es bei nicht optimaler Herstellung der Schweißnähte zu einem Lösen der Verbindung und somit zu einem unerwünschten Ausfall des Behälterführungsgeländers kommt.

Ebenfalls können in den Schweißnähten enthaltene Risse oder Lunker eine Reinigung einer solchen Anlage erheblich erschweren.

Der Erfindung liegt somit die Aufgabe zugrunde, eine Führungseinheit bereitzustellen, an der die Geländerträger besonders einfach mit einer hohen Präzision ausgerichtet sind. Ferner ist es Aufgabe der Erfindung, ein Verfahren zum Herstellen einer derartigen Führungseinheit bereitzustellen.

Die Erfindung löst die Aufgabe durch eine Führungseinheit mit den Merkmalen des Anspruchs 1 und durch ein Verfahren mit den Merkmalen des Anspruchs 11. Vorteilhafte Weiterbildungen sind in den abhängigen Ansprüchen angegeben.

Die erfindungsgemäße Führungseinheit für eine Behälteranlage weist einen Grundkörperabschnitt, insbesondere ein Formatteil oder Führungsteil oder Führungsgeländer, einen Geländerträger zum Anordnen eines Behälterführungsgeländers und einen den Grundkörperabschnitt und den Geländerträger verbindenden Geländersteg auf und ist dadurch gekennzeichnet, dass der Geländersteg gegenüber dem Grundkörperabschnitt plastisch verformt ist. Die plastische Verformung des Geländerstegs erfolgt durch Schubumformen, und erfindungsmäßig durch schraubenförmiges Verdrehen und/oder durch Biegeumformen, beispielsweise durch Biegen. Unter einer schraubenförmigen Verdrehung wird eine Teilumdrehung um die Längsachse des Geländersteges verstanden. Die schraubenförmige Verdrehung ermöglicht eine besonders einfache und präzise Ausrichtung des Geländerträgers gegenüber dem Grundkörperabschnitt. So ist es beispielsweise möglich, den Geländerträger auf einer planen Fläche mit dem Grundkörperabschnitt und dem Geländersteg zu verschweißen. Die bisher vor dem Verschweißen erforderliche, aufwendige Ausrichtung des Geländerträgers am Grundkörperabschnitt entfällt, beziehungsweise wird durch das plane Aufliegen auf einer Auflage deutlich vereinfacht/ Die nachfolgende schraubenförmige Verdrehung kann ohne Positionsänderung des Geländerträgers zum Grundkörperanschnitt erfolgen, sodass keine weitere Ausrichtung des Geländerträgers beziehungsweise des Geländerstegs notwendig ist.

Unter Biegen wird im Rahmen der vorliegenden Erfindung ein plastisches Verformen des Geländerstegs durch Ab- oder Umkanten verstanden, wobei es nicht zu einer Verdrehung des Geländerträgers 4 um die Längsachse A kommt. Diese Vorgehensweise ist besonders dann von großem Vorteil, wenn sich die Soll-Ausrichtungen des Geländerträgers zum Grundkörperabschnitt in der Einbaulage nicht durch Schubumformen herbeigeführt werden kann. Dieses kann beispielsweise dann der Fall sein, wenn sich die Soll-Ausrichtung des Geländerträger gegenüber seiner Ausrichtung bei seiner Herstellung nicht nur relativ zur Längsachse A sondern auch relativ zu mindestens einer Achse mit einer, von der Ausrichtung der Längsachse A abweichenden Ausrichtung unterscheidet.

Unter einem Grundkörperabschnitt wird ein Abschnitt der Führungseinheit verstanden. Es kann sich beispielsweise um einen Abschnitt einer Formatteilebene bei einem mehrstöckigen Formatteil oder um einen Abschnitt des Formatteils selbst handeln. Auch kann es beispielsweise ein mit dem Formatteil oder der Formatteilebene verbindbarer Baukörper sein.

Besonders bevorzugt sind der Grundkörperabschnitt und der Geländersteg und/oder der Geländerträger gemeinsam einstückig ausgebildet.

Führungseinheiten, insbesondere Formatteile, können aus einem plattenförmigen Rohling ausgearbeitet werden. Bei einer einstückigen Ausbildung werden auch der Geländersteg und der Geländerträger gemeinsam als ein Stück aus dem plattenförmigen Rohling herausgetrennt.

Besonders bevorzugt werden der Grundkörper oder der Grundkörperabschnitt und der Geländersteg und der Geländerträger gemeinsam als ein Stück aus einem plattenförmigen Rohling herausgetrennt. Bei dieser Vorgehensweise ist es von besonderem Vorteil, dass der Geländerträger gegenüber dem Grundkörperabschnitt bereits in einer Ebene ausgerichtet ist. Ferner können auch die Abstände der Geländerträger zueinander besonders einfach hergestellt werden.

Gemäß einer Weiterbildung der Erfindung beträgt der Verdrehungswinkel des Geländerstegs zwischen dem Grundkörperabschnitt und dem Geländerträger bei einer Schubumformung zwischen 15 ° und 135 °, vorteilhafterweise 90 °, wobei Toleranzbereiche von beispielsweise +/- 5 ° möglich sind. Die Verdrehung erfolgt entlang seiner Längsachse A, d.h. im Bereich zwischen einem Anschlussbereich des Geländerstegs am Grundkörper und einem Anschlussbereich des Geländerstegs an dem Geländerträger.

Bei dieser Weiterbildung ist der Geländerträger somit senkrecht oder im Wesentlichen senkrecht zum Grundkörperabschnitt ausgerichtet. Dieses ist insbesondere bei einer Ausführung des Behälterführungsgeländers als ein- oder aufschiebbare Schiene vorteilhaft, da so ein schneller Austausch des Behälterführungsgeländers möglich ist.

Die Führungseinheiten können beispielsweise flächig ausgebildet sein, wobei die Behälterführung an den Außenkanten erfolgt. Dementsprechend sind die Geländerträger in einer Ebene der Führungseinheiten angeordnet. Um eine einfache Führung zu ermöglichen, sind die Geländer besonders bevorzugt an einer Außenkante des Grundkörperabschnitts und somit an einer Außenkante der Führungseinheit angeordnet. Insbesondere bei der flächigen Ausführung des Grundkörperabschnitts beziehungsweise des Formatteils, ist die Anordnung der Geländerträger an einer Außenkante besonders einfach möglich und gewährleistet eine besonders gute Führung der Behälter.

Zur Befestigung der Behälterführungsgeländer am Geländerträger sind unterschiedliche Ausführungen möglich. Beispielsweise kann das Behälterführungsgeländer schienenartig auf einem beispielsweise zapfenartig ausgebildeten Geländerträger aufgeschoben werden. Aufgrund der hohen Belastung der Behälterführungsgeländer beim Durchführen der Behälter ist jedoch eine besonders feste und sichere Verbindung des Behälterführungsgeländers mit dem Geländerträger vorteilhaft. Besonders bevorzugt ist daher der Geländerträger u-förmig ausgebildet. Hierdurch kann beispielsweise ein t-förmiges Behälterführungsgelände besonders sicher und stabil am Geländerträger angeordnet werden.

Auch ist es beispielsweise möglich, die freien Schenkelenden zu verdicken um eine Hinterschneidung des u-förmigen Trägers im Behälterführungsgeländer zu bewirken. Die Hinterschneidung bewirkt, dass ein Entfernen des Behälterführungsgeländers aus dem Geländerträger in Richtung der Längsachse des Geländerstegs verhindert und jedoch das Herausziehen quer zur Längsachse des Geländerstegs, d.h. quer zu einer von dem u-förmigen Geländerträger aufgespannten Fläche, möglich ist.

Um ein besonders einfaches Verbinden des Behälterführungsgeländers mit dem Geländerträger zu ermöglichen und um die Führungsperson, die die Führungseinheit auswechselt beziehungsweise die Behälterbehandlungsanlage bedient, zu schützen, ist nach einer Weiterbildung der Erfindung eine Kante, bevorzugt sämtliche Kanten des Geländerträgers entgratet, angefast oder abgerundet. Hierdurch können Verletzungen vermieden werden und der Austausch des Behälterführungsgeländers aus dem Geländerträger ist besonders schnell und beschädigungsfrei möglich.

Die Führungseinheit kann aus unterschiedlichen Materialien, wie beispielsweise Metall oder Kunststoff, bestehen. Auch wären beispielsweise besonders stabile Hölzer oder Holzwerkstoffe denkbar. Der Einsatz der Führungseinheit erfolgt jedoch zumeist in Behälterbehandlungsanlagen für Lebensmittel. Daher besteht der Geländerträger, der Geländersteg und/oder der Körperabschnitt besonders bevorzugt aus einem Edelstahl beziehungsweise einem im Lebensmittelbereich zugelassenen Metall, wodurch beispielsweise eine einfache und im Lebensmittelbereich notwendige Reinigung der Führungseinheit möglich wird.

Weiter löst die Erfindung die Aufgabe durch ein Verfahren zum Herstellen einer Führungseinheit für eine Behälterbehandlungsanlage mit den Schritten: Herstellen eines Grundkörperrohlings einer Führungseinheit mit einem Grundkörperabschnitt, einem Geländersteg und einem Geländerträger zum Anordnen eines Behälterführungsgeländers und nachfolgendes plastisches Verformen des Geländerstegs.

Wie bereits ausgeführt, kann die Herstellung der Führungseinheit beispielsweise durch Anschweißen des Geländerstegs und des Geländerträgers am Grundkörperabschnitt erfolgen. Bevorzugt ist jedoch das einstückige Ausbilden des Grundkörperabschnitts des Geländerstegs und des Geländerträgers aus einem Rohling und das nachfolgende plastische Verformen des Geländerstegs, beispielsweise durch schraubenartiges Verdrehen oder durch Biegen des Geländerstegs. Hierdurch ist die Ausrichtung des Geländerstegs zum Grundkörperabschnitt beziehungsweise der Geländerstege zueinander deutlich vereinfacht und hoch präzise.

Bei der Verwendung von besonders harten oder spröden Materialien ist es beispielsweise auch möglich, zumindest den Geländersteg vorzubehandeln, wie beispielsweise durch ein, der plastischen Verformung vorausgehendes Erwärmen.

Das Herstellen der Führungseinheit kann ebenfalls mit bisher üblichen Methoden erfolgen. So kann beispielsweise aus einem flächigen Rohling der Grundkörperabschnitt der Geländersteg oder auch der Geländerträger ausgestanzt werden. Auch ist es beispielsweise möglich, diese auszusägen. Besonders bevorzugt werden der Geländersteg und der Geländerträger jedoch an einem Grundkörperabschnitt mit einer Laserschneidvorrichtung aus dem Grundkörperrohling ausgeschnitten. Die Laserschneidvorrichtung ermöglicht ein besonders präzises Ausschneiden der Geländerstege und/oder Geländerträger, wodurch beispielsweise auch bei besonders kleinteiligen Geländerstegen und Geländerträgern eine präzise Anordnung und Ausrichtung möglich ist. An einem derartig hergestellten Führungseinheitsrohling ist ferner die plastische Verformung, beispielsweise eine schraubenartige Verdrehung besonders einfach durchführbar, da der Geländersteg und der Geländerträger bereits exakt zur Ebene des Grundkörperabschnitts ausgerichtet sind und ausschließlich eine Verdrehung entlang der jeweiligen Längsachse A der Geländerstege erfolgen muss.

Im Weiteren wird die Erfindung anhand von zwei Ausführungsbeispielen näher beschrieben. Es zeigt:
- Fig. 1:: in einer schematischen Darstellung eine Ausführungsform eines Grundkörperabschnittrohlings mit einstückig aus dem Grundkörperrohling ausgeschnittenen Geländersteg und Geländerträger;
- Fig. 2:: einen Grundkörperabschnitt mit zwei jeweils einstückig ausgebildeten Geländerstegen mit Geländerträger analog zur Figur 1 mit schubverformtem Geländersteg;

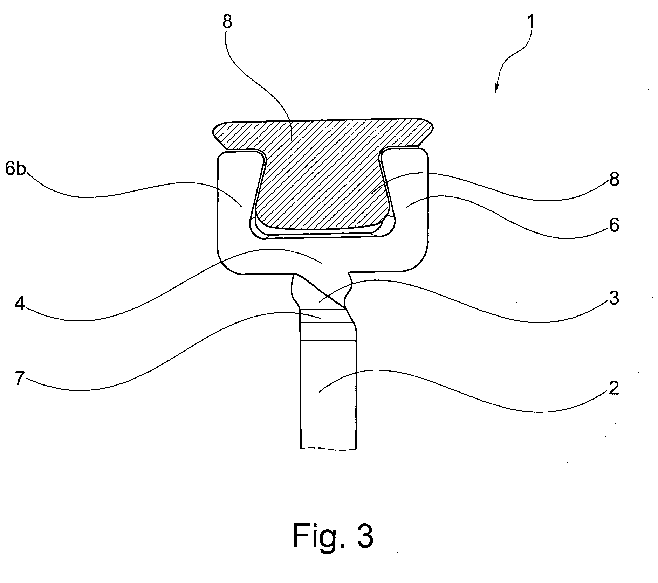

- Fig.3:: in vereinfachter Darstellung einen Geländerträger in welchen ein Behälterführungsgeländer eingesetzt wurde;

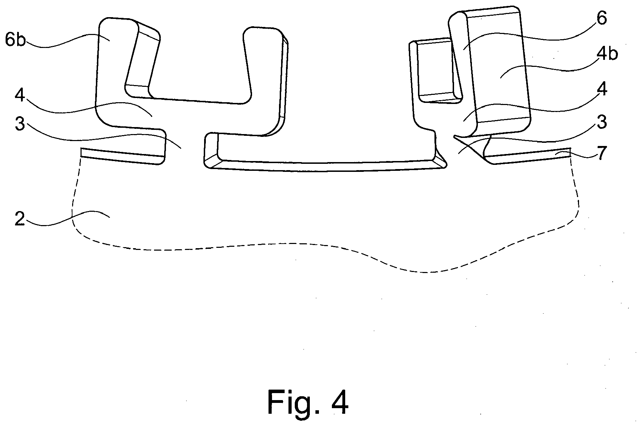

- Fig. 4:: in vereinfachter Darstellung einen Grundkörperabschnittsrohling, mit einem verformten Geländerträger und mit einem noch unverformten Geländerträger

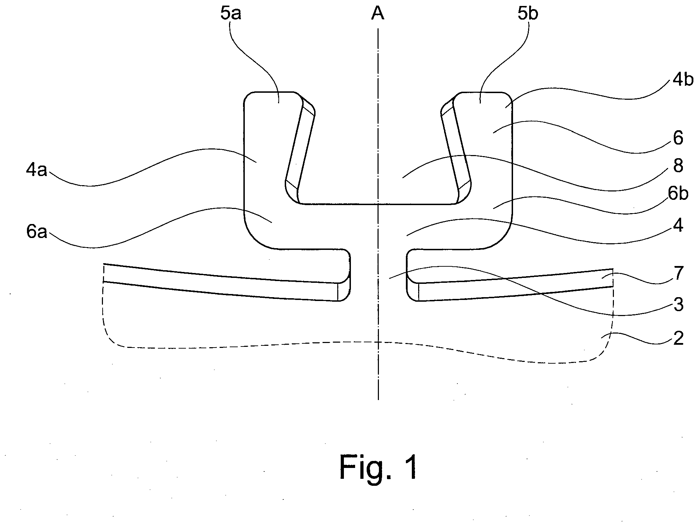

Figur 1 zeigt einen Grundkörperabschnitt 2 eines Formatteils, einem Geländersteg 3 und einem u-förmig ausgebildeten Geländerträger 4. Aus einem plattenförmigen Rohling (hier nicht dargestellt) ist mit einer Laserschneidvorrichtung ein Grundkörperrohling eines Formatteils mit dem Geländersteg 3 und dem Geländerträger 4 herausgeschnitten. Der Geländersteg 3 und der Geländerträger 4 sind an einer Außenkante 7 des Grundkörperabschnitts 2 des Formatteils angeordnet. Dabei sind eine Mehrzahl von Geländerträgen 4 nebeneinander angeordnet um das Behälterführungsgeländer zu befestigen. Die u-Form der Geländerträger 4 ermöglicht später das besonders einfache Einsetzen eines t-förmigen Behälterführungsgeländers 8 in die Geländerträger 4.

Die senkrechten Schenkel 4a, 4b des u-förmigen Geländerträgers 4 sind an ihrem freien Ende 5a, 5b gegenüber ihrem mit einem Trägerschenkel 4c verbundenen Ende 6a, 6b verdickt ausgebildet.

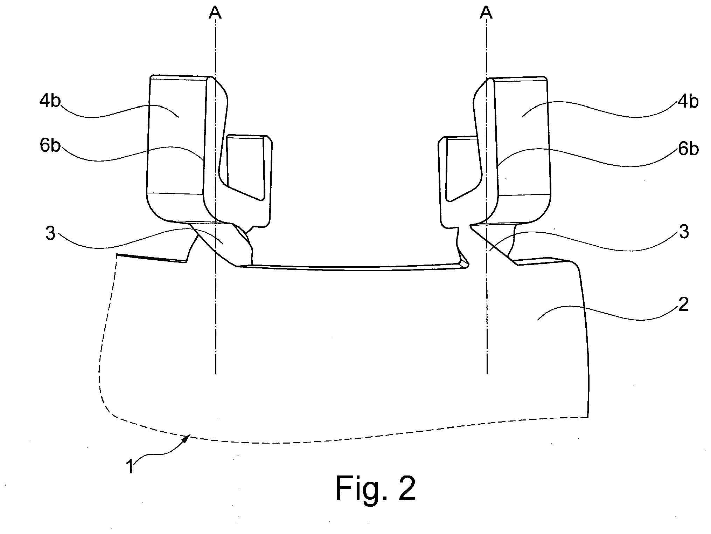

Figur 2 zeigt ausschnittsweise einen Grundkörperrohling 1 mit zwei schraubenartig verdrehten Geländerstegen 3. Die Geländerstege 3 wurde um ihre Längsachse A, hier als gestrichelte Linie schematisch dargestellt, verdreht. Der Verdrehungswinkel beträgt 90°. Die Geländerträger 4 sind somit in einem 90°-Winkel zum Grundkörperabschnitt 2, d.h. senkrecht zum Grundkörperabschnitt 2, ausgerichtet.

Vorstehend wurde stets davon ausgegangen, dass die Bauteile aus einem metallischen Werkstoff, beispielsweise Edelstahl bestehen.

Erfindungsgemäß ist auch die Verwendung von Kunststoffstoffen vorgesehen.

Insbesondere ist vorgesehen, den Grundkörperrohling 1 und/oder den Grundkörperabschnitt 2 und/oder den Geländersteg 3 und/oder den Geländerträger 4 aus einem Kunststoffmaterial, vorzugsweise aus einem plattenförmigen Kunststoffmaterial zu fertigen.

Auch bei der Verwendung von Kunststoffmaterialien kann es überaus vorteilhaft sein, wenn zumindest die Bereiche, die plastisch verformt werden, vor der Verformung erwärmt werden.

### Bezugszeichenliste

- 1: Grundkörperrohling
- 2: Grundkörperabschnitt
- 3: Geländersteg
- 4: Geländerträger
- 4a-4b: senkrechten Schenkel des u-förmigen Geländerträgers 4
- 4c: Trägerschenkel
- 5a-5b: freien Ende des Geländerträgers 4 - verdickt ausgebildet
- 6a-6b: verbundenen Enden des Geländerträgers 4
- 7: Außenkante
- 8: Behälterführungsgeländer

- A: Längsachse

## Patentansprüche

1. Führungseinheit für eine Behälterbehandlungsanlage mit
- einem Grundkörperabschnitt (2), insbesondere einem Formatteil,
- einem Geländerträger (4) zum Anordnen eines Behälterführungsgeländers und
- einen den Grundkörperabschnitt und dem Geländerträger (4) verbindenden Geländersteg (3) wobei der Grundkörperabschnitt, der Geländersteg und der Geländerträger (4) einstückig ausgebildet sind, **dadurch gekennzeichnet, dass** der Geländersteg (3) schraubenförmig verdreht ist.

2. Führungseinheit nach Anspruch 1, **dadurch gekennzeichnet, dass** der Geländersteg (3) plastisch verformt ist.

3. Führungseinheit nach Anspruch 2, **dadurch gekennzeichnet, dass** der Geländersteg (3) durch Schubumformen und/oder Biegeumformen plastisch verformt ist.

4. Führungseinheit nach Anspruch 3, **dadurch gekennzeichnet, dass** der Verdrehungswinkel des Geländerstegs zwischen dem Grundkörperabschnitt und dem Geländerträger (4) zwischen 15° und 135°, vorteilhafterweise 90°, beträgt.

5. Führungseinheit nach einem der Ansprüche 2 bis 4, **dadurch gekennzeichnet, dass** der Geländerträger (4) senkrecht zum Grundkörperabschnitt ausgerichtet ist.

6. Führungseinheit nach einem der vorhergehenden Ansprüche, **dadurch gekennzeichnet, dass** der Geländerträger (4) an einer Außenkante (7) des Grundkörperabschnitts angeordnet ist.

7. Führungseinheit nach einem der vorhergehenden Ansprüche, **dadurch gekennzeichnet, dass** der Geländerträger (4) u-förmig ausgebildet ist.

8. Führungseinheit nach einem der vorhergehenden Ansprüche, **dadurch gekennzeichnet, dass** eine Kante des Geländerträgers (4) entgratet, angefast oder abgerundet ist.

9. Führungseinheit nach einem der vorhergehenden Ansprüche, **dadurch gekennzeichnet, dass** der Geländerträger (4), der Gelandersteg, und/oder der Grundkörperabschnitt aus einem metallischen Werkstoff, beispielsweise Edelstahl bestehen.

10. Führungseinheit nach einem der Ansprüche 1 bis 8, **dadurch gekennzeichnet, dass** der Geländerträger (4), der Geländersteg, und/oder der Grundkörperabschnitt aus einem Kunststoffmaterial bestehen.

11. Verfahren zum Herstellen einer Führungseinheit für eine Behälterbehandlungsanlage mit den Schritten:
- Herstellen eines Grundkörperrohlings (1) einer Führungseinheit mit einem Grundkörperabschnitt, einem Geländersteg und einem Geländerträger (4) zum Anordnen eines Behälterführungsgeländers, wobei der Grundkörperabschnitt, der Geländersteg und der Geländerträger (4) einstückig aus einem einzelnen Bauelement ausgearbeitet werden,
- Plastisches Verformen des Geländerstegs, wobei der Geländersteg (3) schraubenförmig verdreht wird.

12. Verfahren nach Anspruch 11, **dadurch gekennzeichnet, dass** der Geländersteg und der Geländerträger (4) mit einer Laserschneidvorrichtung aus dem Grundkörperrohling (1) ausgeschnitten werden.

## Claims

1. Guide unit for a container handling system, with
- a basic body portion (2), in particular a format part,
- a railing support (4) for the arrangement of a container guide railing, and
- a railing crosspiece (3) connecting the basic body portion and the railing support (4),
wherein
the basic body portion, the railing crosspiece, and the railing support (4) are configured as one piece,
**characterised in that**
the railing crosspiece (3) is rotated in screw fashion.

2. Guide unit in accordance with claim 1, **characterised in that** the railing crosspiece (3) is plastically formed.

3. Guide unit in accordance with claim 2, **characterised in that** the railing crosspiece (3) is formed by plastic shear forming and/or bending.

4. Guide unit in accordance with claim 3, **characterised in that** the angle of rotation of the railing crosspiece between the basic body portion and the railing support (4) is between 15° and 135°, and advantageously 90°.

5. Guide unit in accordance with any one of claims 2 to 4, **characterised in that** the railing support (4) is aligned perpendicular to the basic body portion.

6. Guide unit in accordance with any one of the preceding claims, **characterised in that** the railing support (4) is arranged at an outer edge (7) of the basic body portion.

7. Guide unit in accordance with any one of the preceding claims, **characterised in that** the railing support (4) is configured in a U-shape.

8. Guide unit in accordance with any one of the preceding claims, **characterised in that** an edge of the railing support (4) is chamfered or rounded.

9. Guide unit in accordance with any one of the preceding claims, **characterised in that** the railing support (4), the railing crosspiece, and/or the basic body portion consist of a metallic material, such as special steel.

10. Guide unit in accordance with any one of claims 1 to 8, **characterised in that** the railing support (4), the railing crosspiece, and/or the basic body portion consist of a plastic material.

11. Method for producing a guide unit for a container handling system, with the steps:
- producing a basic body blank (1) of a guide unit, with a basic body portion, a railing crosspiece, and a railing support (4) for the arrangement of a container guide railing, wherein the basic body portion, the railing crosspiece, and the railing support (4) are machined as one piece out of a single structural element,
- plastic forming of the railing crosspiece, wherein the railing crosspiece (3) is rotated in screw fashion.

12. Method according to claim 11, **characterised in that** the railing crosspiece and the railing support (4) are cut out of the basic body blank (1) with a laser cutting device.

## Revendications

1. Unité de guidage pour une installation de manipulation de récipients avec
- une section de corps de base (2), en particulier une partie de format,
- un porte-garde-corps (4) pour disposer un garde-corps de guidage de récipients et
- un élément jointif de garde-corps (3) reliant la section de corps de base et le porte-garde-corps (4) dans laquelle la section de corps de base, l'élément jointif de garde-corps et le porte-garde-corps (4) sont réalisés d'un seul tenant, **caractérisé en ce que** l'élément jointif de garde-corps (3) est tordu de manière hélicoïdale.

2. Unité de guidage selon la revendication 1, **caractérisée en ce que** l'élément jointif de garde-corps (3) est déformé plastiquement.

3. Unité de guidage selon la revendication 2, **caractérisée en ce que** l'élément jointif de garde-corps (3) est déformé plastiquement par déformation par poussée et/ou déformation par cintrage.

4. Unité de guidage selon la revendication 3, **caractérisée en ce que** l'angle de torsion de l'élément jointif de garde-corps entre la section de corps de base et le porte-garde-corps (4) est entre 15° et 135°, de manière avantageuse de 90°.

5. Unité de guidage selon l'une quelconque des revendications 2 à 4, **caractérisée en ce que** le porte-garde-corps (4) est orienté perpendiculairement à la section de corps de base.

6. Unité de guidage selon l'une quelconque des revendications précédentes, **caractérisée en ce que** le porte-garde-corps (4) est agencé au niveau d'un bord extérieur (7) de la section de corps de base.

7. Unité de guidage selon l'une quelconque des revendications précédentes, **caractérisée en ce que** le porte-garde-corps (4) est réalisé en forme de u.

8. Unité de guidage selon l'une quelconque des revendications précédentes, **caractérisée en ce qu'**une arête du porte-garde-corps (4) est ébavurée, chanfreinée ou arrondie.

9. Unité de guidage selon l'une quelconque des revendications précédentes, **caractérisée en ce que** le porte-garde-corps (4), l'élément jointif de garde-corps, et/ou la section de corps de base sont en un matériau métallique, par exemple en acier inoxydable.

10. Unité de guidage selon l'une quelconque des revendications 1 à 8, **caractérisée en ce que** le porte-garde-corps (4), l'élément jointif de garde-corps, et/ou la section de corps de base sont en un matériau plastique.

11. Procédé de fabrication d'une unité de guidage pour une installation de manipulation de récipients avec les étapes de :
- fabrication d'une ébauche de corps de base (1) d'une unité de guidage avec une section de corps de base, un élément jointif de garde-corps et un porte-garde-corps (4) pour disposer un garde-corps de guidage de récipients, dans lequel la section de corps de base, l'élément jointif de garde-corps et le porte-garde-corps (4) sont réalisés d'un seul tenant à partir d'un seul élément de construction,
- déformation plastique de l'élément jointif de garde-corps, dans lequel l'élément jointif de garde-corps (3) est tordu de manière hélicoïdale.

12. Procédé selon la revendication 11, **caractérisé en ce que** l'élément jointif de garde-corps et le porte-garde-corps (4) sont découpés avec un dispositif de coupe au laser à partir de l'ébauche de corps de base (1).
